Europäisches Patentamt

European Patent Office

Office européen des brevets

(19)

(11) Numéro de publication: **0 139 628**
**B1**

(12) **FASCICULE DE BREVET EUROPEEN**

(45) Date de publication du fascicule du brevet: 02.09.87

(51) Int. Cl.⁴: **F 16 F 15/26, B 23 D 25/04**

(21) Numéro de dépôt: 82903048.5

(22) Date de dépôt: 13.10.82

(86) Numéro de dépôt international:
PCT/FR82/00167

(87) Numéro de publication internationale:
WO 84/01606 26.04.84 Gazette 84/11

(54) MACHINE DE COUPE EQUIPEE D'UN DISPOSITIF D'EQUILIBRAGE DYNAMIQUE.

(43) Date de publication de la demande:
08.05.85 Bulletin 85/19

(45) Mention de la délivrance du brevet:
02.09.87 Bulletin 87/36

(84) Etats contractants désignés:
BE CH DE GB LI NL

(56) Documents cités:
DE-A-2 734 132
DE-C- 117 809
FR-A-2 175 081
FR-A-2 504 228
FR-A-3 356 613
GB-A- 340 720
US-A-1 342 648

(73) Titulaire: **EASTMAN KODAK COMPANY**
**343 State Street**
**Rochester New York 14650 (US)**

(72) Inventeur: **GAUDILLAT, Jacques, Fernand**
**2, rue des Tuileries Châtenoy en Bresse**
**F-71380 Saint Marcel (FR)**
Inventeur: **MARTIN, André, Robert**
**35, rue du 134ème R.I.**
**F-71100 Châlon sur Saône (FR)**

(74) Mandataire: **Buff, Michel et al**
**Kodak-Pathé Département des Brevets et**
**Licences CRT Zone Industrielle**
**F-71102 Chalon sur Saône Cédex (FR)**

Courier Press, Leamington Spa, England.

EP 0 139 628 B1

## Description

La présente invention est relative à une machine de coupe equipée d'un dispositif d'équilibrage dynamique. Plus particulièrement, l'invention concerne une telle machine de coupe munie d'un bloc de coupe monté sur un mécanisme du type bielle-manivelle.

Un mécanisme bielle-manivelle peut servir à animer une masse, fixée au bout libre de la bielle, d'un mouvement rectiligne oscillant. Dans ce mouvement, des efforts et des couples alternatifs agissent sur l'articulation fixe de la manivelle. Ces efforts et ces couples alternatifs engendrent des vibrations qui affectent évidemment défavorablement le fonctionnement du mécanisme. Divers dispositifs de stabilisation ont été conçu pour supprimer ces vibrations ou, au moins pour en réduire l'importance.

Ces efforts et couples variables responsables des vibrations des mécanismes bielle-manivelle doivent être particulièrement bien équilibrés quand ces mécanismes sont incorporés à des machines de production fonctionnant à des cadences rapides, comme c'est le cas, par exemple, des machines de coupe équipées de blocs de coupe ou de perforation oscillants, pour tôle, papier, carton, films, etc. En effet ces vibrations, entre autres inconvénients, limitent la cadence pratique de production de la machine compatible avec un niveau sonore acceptable, provoquent une usure accélérée des pièces affectées par ces vibrations et sont à l'origine de jeux responsables d'une mauvaise reproductibilité des mouvements des pièces, incompatible avec les tolérances de coupe requises des machines de haute précision.

Pour empêcher ces vibrations, une première solution consiste à assurer une stabilisation "statique" par masses, en montant le mécanisme bielle-manivelle sur un fort bâti et/ou sur des fondations lourdes. Cette solution présente néanmoins l'inconvénient d'exiger l'installation d'un matériel lourd et encombrant, sans pour autant empêcher l'usure des paliers et autres organes soumis à des efforts variables.

Une deuxième solution consiste à assurer une stabilisation par isolation et par amortissement à l'aide de ressorts, de blocs de caoutchouc ou de coussins d'air. Malheureusement ce type de stabilisation n'est efficace que pour une certaine vitesse de rotation de la manivelle et ne convient donc pas à un mécanisme où l'on souhaite justement faire varier cette vitesse, comme c'est le cas notamment dans les mécanismes destinés à supporter des blocs de coupe oscillants, adaptables à des travaux de coupe ou de perforation variés.

Une troisième solution, établissant un équilibrage "dynamique", met en jeu un volant d'inertie qui tourne avec la manivelle autour de l'axe de rotation de celle-ci, pour "lisser" les variations du couple agissant sur cet axe. Ce moyen ne résout pas pour autant le problème de l'équilibrage des efforts alternés appliqués sur l'axe de rotation.

Une autre solution consiste à équilibrer, autant que possible, tous les efforts et/ou couples qui provoquent les vibrations. Pour cela on peut raccorder la tête de manivelle à une ou plusieurs autres masses mobiles, agencées de manière à annuler ou réduire efforts et couples agissant sur l'axe de rotation fixe de la manivelle. C'est l'équilibrage "dynamique" adopté notamment dans les moteurs à pistons, en "étoile" ou en "V". Un mécanisme simple de ce type comprend deux masses mobiles sur deux axes orthogonaux, ces masses étant reliées par des bielles à la tête d'une manivelle tournant autour de l'intersection des axes. Cette solution est illustrée par le dispositif d'équilibrage décrit au brevet français n° 335.613. On obtient ainsi un équilibrage satisfaisant des couples à l'intersection des axes. Par contre les masses mobiles sont le plus souvent guidées sur leurs axes par des paliers qui sont sujets à une usure rapide, dans les machines à grande cadence de fonctionnement. Cet inconvénient se retrouve dans le dispositif d'équilibrage incorporé à la machine de coupe décrite dans la demande de brevet allemand DE—A—2.734.132.

La présente invention a pour but de réaliser une machine de coupe équipée d'un dispositif d'équilibrage dynamique qui ne présente aucun des inconvénients mentionnés ci-dessus.

On atteint ce but avec une machine de coupe équipée d'un dispositif d'équilibrage dynamique pour tronçonner "au vol" un produit en bande défilant dans un bloc de coupe (1) monté sur un support qui constitue avec le bloc de coupe une masse $M_1$ mobile parallèlement au plan de défilement du produit de manière à suivre celui-ci pendant la coupe, le support étant déplacé par une manivelle entraînée en rotation par un moteur et connectée à une extrémité d'une première bielle (8) dont l'autre extrémité est connectée au support, le dispositif d'équilibrage comprenant une deuxième masse $M_2$ connectée par une deuxième bielle (13) à la manivelle, le bloc de coupe comportant un couteau fixe (20) et un couteau mobile (19) actionné par une troisième bielle connectée à la manivelle, cette machine étant caractérisée en ce que le support du bloc de coupe prend la forme d'un parallèlogramme articulé (2, 3, 17) définissant un guidage quasi-rectiligne, en ce que les trois bielles sont connectées à la manivelle par une articulation commune (12) de manière que la rotation de la manivelle actionné simultanément les trois bielles, en ce que les couples dus aux masses $M_1$ et $M_2$ sur l'axe de rotation fixe (11) de la manivelle s'équilibrent, et en ce que le dispositif d'équilibrage comprend en outre un contrepoids de masse m monté sur la manivelles de manière à équilibrer la résultante des réactions aux efforts appliqués par les masses $M_1$ et $M_2$ sur l'articulation commune (12) aux trois bielles.

Au dessin annexé, donné seulement à titre d'exemple:

— la figure 1 est un schéma d'un mécanisme de transmission bielle-manivelle classique,

2

— la figure 2 est un schéma d'un mécanisme du type de celui de la figure 1, perfectionné par l'adjonction d'un dispositif d'équilibrage dynamique,

— la figure 3 est un schéma partiel d'une variante du mécanisme de la figure 2 et,

— la figure 4 représente un mode de réalisation préféré d'une partie d'une machine suivant l'invention équipée du mécanisme de la figure 2.

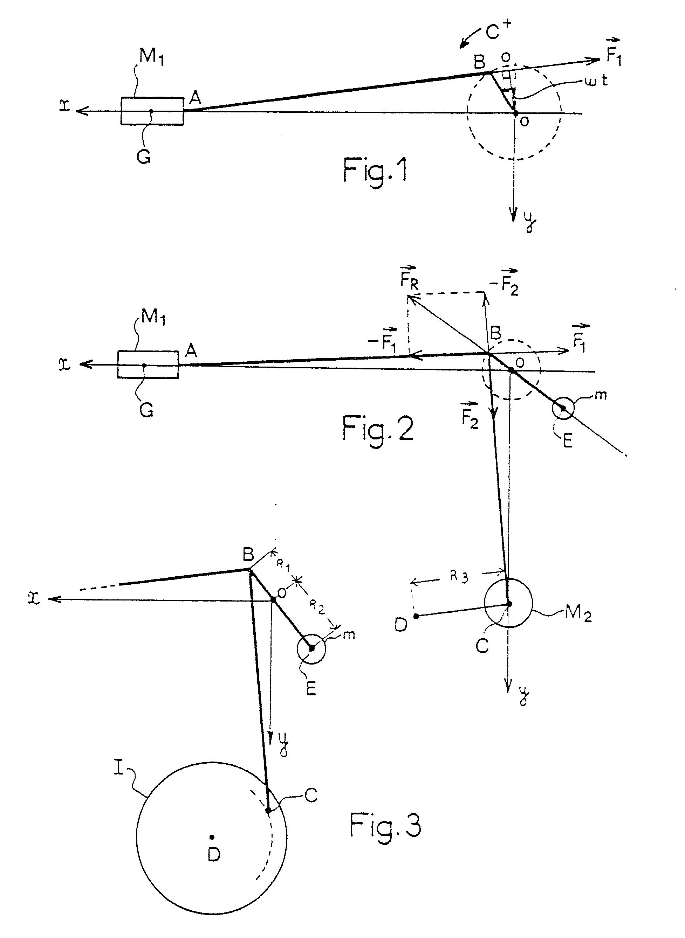

Le mécanisme de transmission classique de la figure 1 comprend une manivelle OB de longueur $R_1$ qui tourne autour d'un axe O. Cette manivelle est raccordée à une masse $M_1$ par une bielle AB articulée en B sur la manivelle et en A sur la masse $M_1$. Celle-ci est guidée sur une trajectoire rectiligne d'axe Ox, par des moyens connus non représentés.

Si on suppose qui la longueur de la bielle AB est grande par rapport à celle de la manivelle OB, l'élongation x du centre de gravité G de la masse $M_1$ quand la manivelle tourne à la vitesse angulaire $\omega$ est:

$$x = R_1 \sin\omega t$$

par rapport au centre de la course de $M_1$.

L'effort $\vec{F}_1$ transmis en B vaut donc approximativement:

$$|F_1| = M_1\gamma = M_1 \cdot \frac{d^2x}{dt^2} = -M_1 R_1 \omega^2 \sin\omega t$$

C'est un effort alternatif.

Le couple en O vaut:

$$C = F_1 \cdot OO' \simeq F_1 R_1 \cos\omega t = -\frac{M_1 R_1{}^2 \omega^2}{2} \cdot \sin 2\omega t$$

Il change de sens quatre fois par tour. Les variations périodiques de $\vec{F}_1$ et C entraînent des vibrations et des difficultés de régulation de vitesse.

Suivent un premier mode de réalisation de l'invention (voir figure 2) on pallie ces inconvénients en ajoutant, au mécanisme bielle-manivelle classique, un dispositif d'équilibrage constitué:

(1) d'une deuxième bielle BC qui déplace en C une masse $M_2$, sur la perpendiculaire Oy à l'axe d'oscillation Ox de la masse $M_1$,

(2) d'un contrepoids $m$ placé sur la manivelle OB de manière qui $m$ et B soient de part et d'autre de O.

La masse $M_2$ peut être guidée sur Oy par des paliers. Cependant une telle solution implique une usure des pièces par frottement sur ces paliers. Selon un mode de réalisation préferé du méchanisme on évite cet inconvénient en montant la masse $M_2$ sur une manivelle CD, comme schématisé à la figure 2. En choisissant une manivelle de longueur suffisante, on définit pour $M_2$ une course quasi-rectiligne, sans faire usage de paliers.

Si on suppose que la longueur de la bielle BC est grande par rapport à celle de la manivelle OB, l'effort transmis en B par la bielle BC sera:

$$F_2 \simeq -M_2 R_1 \cdot \omega^2 \cdot \cos\omega t$$

ce qui donne en O un couple C':

$$C' \simeq F_2 \times R_1 \sin\omega t = \frac{M_2 R_1^2 \cdot \omega^2}{2} \sin 2\omega t$$

Le couple C sera équilibré si $|C| = |C'|$ soit si:

$$M_2 = M_1 \tag{1}$$

Le schéma partiel de la figure 3 correspond à un autre mode de réalistion du méchanisme, dans lequel la masse d'équilibrage $M_2$ est remplacée par un volant d'inertie I, qui tourne autour de D et qui est connecté en C à la bielle BC, C se trouvant sur la perpendiculaire Oy à l'axe Ox. Dans ce cas on aura équlibrage des couples en O si:

$$\frac{I}{R_3^2} = M_1 \quad \text{avec} \quad |CD| = R_3$$

L'utilisation d'un volant à la place d'une masse $M_2$ (bien que créant des efforts alternés en D) est

3

**0 139 628**

d'exécution plus simple et permet de choisir la position d'équilibre du mécanisme à l'arrêt, par décalage du centre de gravité par rapport au centre de rotation (grâce à l'adjonction de masselottes réglables).

Ainsi, on peut obtenir l'équilibrage du couple en O, et donc la suppression des vibrations dues à un couple périodique, à l'aide d'une masse $M_2$ à guidage rectiligne ou pseudo-rectiligne (par bielle, par parallélogramme, par guidage "d'Evans", etc.).

Pour supprimer toute vibration, il convient d'équilibrer aussi les efforts périodiques sur le palier O. Ce but est atteint, dans les dispositifs d'équilibrage des figures 2 et 3, à l'aide d'un contrepoids $m$ monté sur la manivelle qui tourne en O.

Sur les figures 2 et 3, $\vec{F_1}$ et $\vec{F_2}$ représentent les efforts dus aux masses $M_1$ et $M_2$, respectivement. Ces efforts engendrent en B sur la manivelle des réactions $-\vec{F_1}$ et $-\vec{F_2}$ telles que:

$$| F_1 |=M_1R_1\omega^2 \cdot \sin\omega t$$

$$| F_2 |=M_2R_1\ \omega^2 \cdot \cos\omega t=M_1R_1\ \omega^2 \cdot \cos\omega t,\ \text{car}\ M_1=M_2,$$

le couple étant équilibré comme on l'a vu plus haut (voir relation (1)).

La composition de ces deux réactions donne une résultante $\vec{F_R}$ telle que:

$$| F_R |\simeq M_1R_1\ \omega^2$$

(en tenant compte des approximations énoncées ci-dessus)

Il s'agit d'une force tournante colinéaire à OB puisque la couple en O est nul.

On peut donc équilibrer cette force $\vec{F_R}$ à l'aide d'un contrepoids $m$ monté en E($| OE |=R_2$) sur la manivelle qui tourne en O, de manière à développer une force centrifuge $\vec{F_c}$ telle que:

$$\vec{F_c}+\vec{F_R}=0$$

On atteint ce résultat quand:

$$m\ R_2=M_1R_1 \tag{2}$$

Ainsi, aux approximations faites près, on équilibre efforts et couples en O à l'aide:

(1) d'une masse $M_2=M_1$, ou d'un volant d'inertie équivalent, exerçant en B un effort qui crée un couple en O tel qu'il équilibre celui dû à la masse $M_1$ et,

(2) d'un contrepoids $m$ placé en E sur la manivelle du mécanisme à une distance $OE=R_2$ telle que $mR_2=M_1R_1$.

Cet équilibrage complet supprime les vibrations qui sont engendrées par des efforts et couples alternatifs.

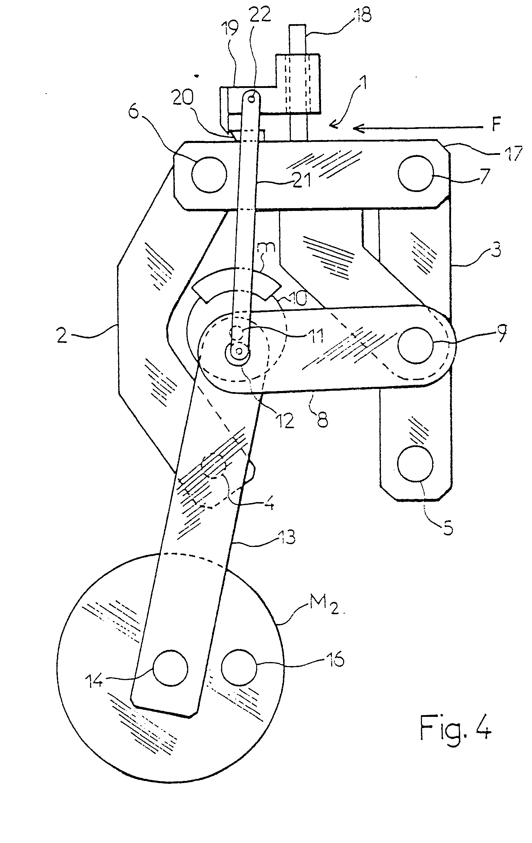

On a représenté à la figure 4, un mode de réalisation préféré d'une partie d'une machine de coupe suivant l'invention, munie d'un mécanisme de transmission bielle-manivelle équipé d'un dispositif d'équilibrage. Ce mécanisme sert, dans une machine de coupe, à déplacer un bloc de coupe de films photographiques, de référence générale 1. Ce bloc de coupe 1 est monté oscillant sur un support monté en parallélogramme (2, 3) dont les bras 2 et 3 sont respectivement articulés sur le bâti en 4 et 5, et sur le bloc 1 en 6 et 7. Un tel support ne comprend que des articulations et n'est donc pas sujet à l'usure par frottement qui affecte à la longue les supports du type palier, sur lesquels glissent les pièces à guider.

Le mécanisme de transmission comprend une bielle 8 qui est articulée en 9 sur une pièce solidaire du bloc 1. La "manivelle" est constituée par un disque 10 qui tourne autour d'un axe 11. Une extrémité de la bielle 8 s'articule sur ce disque autour d'un axe 12 excentré. Le disque porte une masselotte d'équilibrage $m$ formant contrepoids, centrée dans le plan des axes 11 et 12.

Une deuxième bielle 13 s'articule à une extrémité sur l'axe 12 et, à l'autre extrémité, sur un axe 14 solidaire d'un disque $M_2$ pivotant autour d'un axe excentré 16.

Le bloc de coupe 1, de masse globale $M_1$, comprend un support 17 duquel déborde une potence 18 qui guide un couteau 19 mobile verticalement. Ce couteau coopère avec un contre-couteau 20 fixé directement sur le support 17. Le couteau 19 est actionné par une bielle 21 montée, à une extrémité, en 22 sur le couteau 19 et, à l'autre extrémité, sur l'axe excentré 12.

Quand le disque 10 tourne sous l'action d'un moteur (non représenté), la bielle 21 communique un mouvement vertical oscillant au couteau 19, qui coopère alors avec le contre-couteau 20 pour couper "au vol" un film défilant suivant l'axe de la flèche F, sous l'action de moyens d'entraînement (non représentés). En effet, grâce à la bielle 8, le bloc de coupe 1 "suit" le film pendant la coupe.

En comparant ce mode de réalisation au schéma de la figure 2, on remarque que le pied 14 de la bielle 13 est décalé à gauche du plan des axes 11 et 16 correspondant à l'axe Oy de la figure 2. Ce décalage, par rapport à la position sur l'axe Oy du pied de bielle C de la figure 2, répond à des caractéristiques particulières du mode de réalisation de la figure 4.

Le décalage permet, d'une part, de définir une position d'équilibre du mécanisme au repos (position basse du disque $M_2$). D'autre par il tient compte de la présence d'une masse animée d'un mouvement vertical oscillant (le couteau 19 et la bielle 21). Enfin, ce décalage permet de corriger les effets de

4

**0 139 628**

l'utilisation d'une bielle 8 dont le rapport de la longueur à celle de la manivelle (11, 12) est un peu faible, par rapport à celui pris en compte dans les calculs développés plus haut.

Il est clair que, en dehors des ajustements décrits ci-dessus, qui sont du domaine de l'homme de métier, l'équilibrage des efforts et couples autour de l'axe 11 s'opère comme décrit et représenté en liaison avec la figure 2, où l'axe O joue le rôle de cet axe 11.

Grâce au dispositif d'équilibrage qui équipe la machine de coupe suivant l'invention, on a pu faire fonctionner un bloc de coupe de 25 kg à 1200 coups/minute, sur une course d'une amplitude de 3,5 cm, sans vibration et avec un bruit modéré. Sans ce dispositif d'équilibrage, la cadence aurait été limitée à 300 ou 400 coups/minute environ.

On remarquera aussi que l'équilibrage obtenu ne dépend pas de la vitesse de rotation de l'axe O (figures 2 et 3). On peut donc faire varier cette vitesse (et donc la cadence de la coupe) sans altérer l'équilibrage du mécanisme.

En outre, le couple en O étant nul, la puissance d'entraînement nécessaire est limitée à l'absorption des pertes par frottement. L'équilibrage permet aussi de réduire l'usure des paliers en O.

Le dispositif d'équilibrage de la machine decoupe suivant l'invention se prête facilement à une variation du rayon $R_1$ de la manivelle OB. Une telle variation est utile, par exemple, quand il faut adapter la course d'un bloc de coupe à un nouveau format de coupe. Cette variation du rayon $R_1$ n'altèrera pas l'équilibrage établi si on maintient $R_1$ et $R_2$ dans le rapport:

$$\frac{R_1}{R_2} = \frac{m}{M_1} \quad \text{(voir relation (2))}.$$

On pourra adapter $R_2$ à la nouvelle valeur de $R_1$ en montant la masselotte $m$ et l'articulation B sur un moyen tel qu'un mécanisme comprenant deux vis OE et OB de pas contraire, de telle manière que $m$ et B s'écartent ou se rapprochent de l'axe O dans les proportions voulues.

**Revendications**

1. Machine de coupe équipée d'un dispositif d'équilibrage dynamique pour tronçonner "au vol" un produit en bande défilant dans un bloc de coupe (1) monté sur un support qui constitue avec le bloc de coupe une masse $M_1$ mobile parallèlement au plan de défilement du produit de manière à suivre celui-ci pendant la coupe, le support étant déplacé par une manivelle entraînée en rotation par un moteur et connectée à une extrémité d'une première bielle (8) dont l'autre extrémité est connectée au support, le dispositif d'équilibrage comprenant une deuxième masse $M_2$ connectée par une deuxième bielle (13) à la manivelle, le bloc de coupe comportant un couteau fixe (20) et un couteau mobile (19) actionné par une troisième bielle connectée à la manivelle, cette machine étant caractérisée en ce que le support de bloc de coupe prend la forme d'un parallélogramme articulé (2, 3, 17) définissant un guidage quasi-rectiligne, en ce que les trois bielles sont connectées à la manivelle par une articulation commune (12), de manière que la rotation de la manivelle actionne simultanément les trois bielles, en ce que les couples dus aux masses $M_1$ et $M_2$ sur l'axe de rotation fixe (11) de la manivelle s'équilibrent, et en ce que le dispositif d'équilibrage comprends en outre un contrepoids de masse m monté sur la manivelle de manivelle de manière à équilibrer la résultante des réactions aux efforts appliqués par les masses $M_1$ et $M_2$ sur l'articulation commune (12) aux trois bielles.

2. Machine conforme à la revendication 1, caractérisée en ce que la manivelle est constituée par un disque (10) présentant un axe central (11) et un axe excentré (12) constituant l'articulation commune, en ce que la masse $M_2$ est constituée par un deuxième disque d'axe central (14) et pivotant autour d'un axe excentré fixe (16), la deuxième bielle (13) reliant le deuxième disque à la manivelle étant articulée à une extrémité sur l'axe excentré (12) et, à son autre extrémité, sur l'axe central (14) le contrepoids m et l'axe (12) étant situés, sur le disque 10, de part et d'autre de l'axe (11).

3. Machine conforme à la revendication 1, caractérisée en ce que les masses $M_1$ et $M_2$ sont égales et sont mobiles sur des axes sensiblement perpendiculaires, les bielles qui les relient à cette manivelle étant de grande longueur par rapport à la distance $R_1$ qui sépare leur articulation commune de l'axe de rotation de la manivelle.

4. Machine conforme à la revendication 1, caractérisée en ce que la masse $M_2$ est un volant d'inertie relié à la deuxième bielle par une articulation mobile au voisinage d'un axe perpendiculaire au plan de défilement du produit et passant par l'axe de rotation de la manivelle.

5. Machine conforme à l'une quelconque des revendications 3 et 4, caractérisée en ce que l'axe de rotation (11) de la manivelle est placé entre le contrepoids et l'articulation commune (12) des bielles, à une distance $R_2$ du centre de gravité du contrepoids telle que:

$$R_2 \times m = R_1 \times M_1$$

6. Machine conforme à la revendication 5, caractérisée en ce qu'elle comprend un moyen pour faire varier simultanément les valeurs de $R_1$ et $R_2$ sans changer la valeur de leur rapport.

**Patentansprüche**

1. Schneidemaschine mit einer dynamischen Ausgleichsvorrichtung zum Zerschneiden eines bandförmigen Materials "im Flug", das durch einen Schneideblock (1) läuft, der auf einem Lager angeordnet ist, welches mit dem Schneideblock zusammen eine parallel zur Bewegungsebene des Bandmaterials bewegliche Masse $M_1$ bildet, die dem Material während des Schneidens folgt, wobei das Lager durch eine von einem Motor in Rotation versetzte Kurbel bewegt wird, die an einem Ende einer ersten Kurbelstange (8) befestigt ist, deren anderes Ende mit dem Lager verbunden ist, wobei die Ausgleichsvorrichtung eine zweite, durch eine zweite Kurbelstange (13) mit der Kurbel verbundene Masse $M_2$ umfaßt und der Schneideblock ein ortsfestes Messer (20) und ein bewegliches Messer (19) aufweist, das durch eine dritte mit der Kurbel verbundene Kurbelstange bewegt wird, dadurch gekennzeichnet, daß das Lager des Schneideblocks die Form eines schwenkbaren Parallelogramms (2, 3, 17) besitzt und eine fast geradlinige Führung bildet, daß die drei Kurbelstangen durch ein gemeinsames Gelenk (12) so mit der Kurbel verbunden sind, daß durch die Rotation der Kurbel die drei Kurbelstangen gleichzeitig angetrieben werden, daß sich die von den Massen $M_1$ und $M_2$ auf der feststehenden Rotationsachse (11) der Kurbel erzeugten Drehmomente ausgleichen und dadurch, daß die Ausgleichsvorrichtung außerdem ein Gegengewicht einer Masse m aufweist, welches so auf der Kurbel angebracht ist, daß es die Resultante der Wirkungen der Kräfte ausgleicht, die durch die Massen $M_1$ und $M_2$ auf das den drei Kurbelstangen gemeinsame Gelenk (12) ausgeübt werden.

2. Schneidemaschine nach Anspruch 1, dadurch gekennzeichnet, daß die Kurbel aus einer Scheibe (10) besteht, welche eine zentrale Achse (11) und eine in einem Abstand vom Mittelpunkt angeordnete, das gemeinsame Gelenk bildende Achse (12) aufweist, daß die Masse $M_2$ durch eine zweite Scheibe gebildet wird, die eine zentrale Achse (14) besitzt und um eine vom Mittelpunkt entfernt angeordnete, feststehende Achse (16) verschwenkbar ist, wobei die zweite Kurbelstange (13), die die zweite Scheibe mit der Kurbel verbindet, an ihrem einen Ende an der in einem Abstand vom Mittelpunkt angeordneten Achse (12) und mit ihrem anderen Ende an der zentralen Achse (14) gelenkig befestigt ist, und das Gegengewicht m und die Achse (12) auf der Scheibe (10) auf entgegengesetzten Seiten der Achse (11) angeordnet sind.

3. Schneidemaschine nach Anspruch 1, dadurch gekennzeichnet, daß die Massen $M_1$ und $M_2$ gleich groß und auf deutlich senkrecht zueinander verlaufenden Achsen beweglich sind, wobei die Kurbelstangen, die sie mit der Kurbel verbinden, im Verhältnis zu dem Abstand $R_1$ zwischen ihrem gemeinsamen Gelenk und der Rotationsachse der Kurbel sehr lang sind.

4. Schneidemaschine nach Anspruch 1, dadurch gekennzeichnet, daß die Masse $M_2$ ein Massenschwungrad ist, welches mit der zweiten Kurbelstange durch ein einer senkrecht zur Bewegungsebene des Bandmaterials verlaufenden Achse benachbartes bewegliches Gelenk verbunden ist und an der Rotationsachse der Kurbel vorbeiläuft.

5. Schneidemaschine nach einem der Ansprüche 3 und 4, dadurch gekennzeichnet, daß die Rotationsachse (11) der Kurbel so zwischen dem Gegengewicht und dem gemeinsamen Gelenk (12) der Kurbelstangen in einem Abstand $R_2$ vom Schwerpunkt des Gegengewichtes angeordnet ist, daß

$$R_2 \times m = R_1 \times M_1$$

6. Schneidemaschine nach Anspruch 5, dadurch gekennzeichnet, daß sie ein Mittel aufweist, mit dem sich die Werte von $R_1$ und $R_2$ gleichzeitig verändern lassen, ohne daß sich dadurch der Wert ihres Verhältnisses ändert.

**Claims**

1. A cutting machine provided with a dynamic balancing device for continuously cutting a web moving in a cutting block (1) mounted on a support which constitutes with said cutting block a mass $M_1$ which is movable parallel to the path of said web so that said block follows said web during the cutting operation, the support being actuated by means of a crank, which is rotated by means of a motor and connected to one end of a first rod (8), the other end of which is connected to said support, the balancing device comprising a second mass $M_2$ connected by means of a second rod (13) to said crank, the cutting block comprising a knife (20) fixed thereon and a movable knife (19) actuated by a third rod connected to said crank, said cutting machine being characterized in that the support of said cutting block is a hinged connected-parallelogram (2, 3, 17) defining a quasi-rectilinear guiding, in that the three rods are connected to said crank by a common hinge (12), so that the rotation of said crank actuates simultaneously the three rods, in that the torques due to masses $M_1$ and $M_2$ about the rotation axle (11) of said crank are thereby balanced and in that the balancing device further comprising a counterweight of mass m which is fixed on said crank in order to balance the resultant of the reaction to the efforts applied by masses $M_1$ and $M_2$ to common hinge (12) of the three rods.

2. A cutting machine as defined in claim 1, characterized in that the crank comprises a first disc (10) having a central axle (11) and an eccentric axle (12) forming the common hinge, in that mass $M_2$ is comprised of a second disc having a central axle (14) and swinging around a stationary eccentric axle (16), second rod (13) connecting said second disc to the crank being hinged on said eccentric axle (12) at one end

6

and, on said central axle (14) on the other end, said counterweight m and said axle (12) being located on said first disc (10) on both sides of said axle (11) respectively.

3. A cutting machine as defined in claim 1, characterized in that said masses $M_1$ and $M_2$ are equal and movable about generally perpendicular axes, said rods which connect said masses to said crank having a great length compared to the distance $R_1$ between the common hinge and the rotation axle of the crank.

4. A cutting machine as defined in claim 1, characterized in that mass $M_2$ is an inertia flywheel connected to said second rod by a movable hinge, in the vicinity of an axis perpendicular to the path of said web, and passing through said rotation axle of said crank.

5. A cutting machine as defined in any of claims 3 and 4 characterized in that said rotation axle (11) of said crank is located between the counterweight and said common hinge (12) of the rods, at such a distance $R_2$ from the center of gravity of the counterweight, that:

$$R_2 \times m = R_1 \times M_1$$

6. A cutting machine as defined in claim 5, characterized in that it comprises means for simultaneously varying $R_1$ and $R_2$ values without changing their ratio value.

0 139 628

Fig.1

Fig.2

Fig.3

1

0 139 628

Fig. 4

2